# EUROPÄISCHE PATENTANMELDUNG

(11) **EP 4 516 733 A1**
(43) Veröffentlichungstag der Anmeldung: **05.03.2025**
(21) Anmeldenummer: 23194301.0
(22) Anmeldetag: 30.08.2023
(51) Int. Cl.: C01B 25/01, C01B 25/02, C02F 11/00, C22B 1/08

(54) **RÜCKGEWINNUNG VON PHOSPHOR IN FORM SEINER CHLORIDE AUS KLÄRSCHLAMMASCHE**

(71) Anmelder: LANXESS Deutschland GmbH, 50569 Köln (DE)
(72) Erfinder: BOLL, Matthias, 51061 Köln (DE)

(57) **Zusammenfassung**

Die Erfindung betrifft ein Verfahren zur Rückgewinnung von Phosphor in Form seiner Chloride, in dem man Klärschlammasche mit einem Phosphorgehalt, ausgedrückt in Gew.-% an elementarem Phosphor in der Asche, von wenigstens 2 Gew.-% in Gegenwart einer Kohlenstoffquelle mit elementarem Chlor bei einer Temperatur von 350 bis 900°C umsetzt und die gebildeten Phosphorchloride aus dem Abgasstrom abtrennt.

## Beschreibung

Die vorliegende Erfindung betrifft die Rückgewinnung von Phosphor in Form seiner Chloride aus Klärschlammasche.

Der Wunsch zur Rückgewinnung von Rohstoffen aus Klärschlamm ist in den letzten Jahren vor allem aus ökologischen und politischen Gründen gewachsen.

Es ist üblich, teil-entwässerten Schlamm großer Kläranlagen in Verbrennungsanlagen zu verbrennen.

Die entstehende Asche ist ein hauptsächlich anorganischer Rückstand, der verschiedene Elemente wie Phosphor (P), Eisen (Fe), Aluminium (Al), Kalzium (Ca) und Silizium (Si) enthält. Die Entsorgung dieser Asche durch Ausbringung in die Umwelt ohne weitere Behandlung kann zu einer ernsthaften Umweltverschmutzung führen, hauptsächlich aufgrund des Vorhandenseins von Schwermetallen und anderen giftigen Substanzen.

Darüber hinaus hat die unbehandelte Asche ein geringes Gewicht, ist fein verteilt und staubig, was die Handhabung, den Transport, Lagerung und die Entsorgung erschwert. Daher stellt die Entsorgung dieser Asche in vielen Teilen der Welt ein zunehmendes Problem dar.

Angesichts dieser Probleme ist es notwendig geworden, Verfahren zur Behandlung dieser Rückstände zu entwickeln, mit dem Ziel, die darin enthaltenen Elemente zurückzugewinnen und für verschiedene Anwendungen wiederzuverwenden.

Tatsächlich gibt es im Stand der Technik verschiedene Versuche und Methoden, Klärschlammasche als Quelle für wertvolle Rohstoffe zu nutzen.

Der Rückgewinnung von Wertstoffen aus der Klärschlammasche kommt eine zunehmende Bedeutung zu, was insbesondere die Verwertung von Phosphor betrifft, für den weltweit ein hoher Bedarf bei gleichzeitig begrenzter Verfügbarkeit besteht.

Je nach Betriebsweise der Kläranlage liegt die Konzentration an Phosphor in der Klärschlammasche, ausgedrückt in elementarer Form, üblicherweise bei 2 bis 13 Gew.-%.

Weitere Hauptbestandteile der Klärschlammasche sind, neben Phosphor, Eisen (Fe), Aluminium (Al), Kalzium (Ca) und Silizium (Si).

Im Stand der Technik sind verschiedene Ansätze bekannt, Phosphor aus der bei Verbrennungsprozessen anfallenden Klärschlammasche zu gewinnen. Berichtete Arbeiten zur Phosphorrückgewinnung aus Klärschlammasche stehen oft im Zusammenhang mit thermochemischen Behandlungs- oder Säurelaugungsprozessen.

Bei der thermochemischen Behandlung von Klärschlammaschen wie beispielsweise in EP1669467A1 wird die Klärschlammasche, ohne Vorhandensein eines Kohlenstoffträgers, mit Chlorgas umgesetzt, um Schwermetallchloride zu entfernen, wobei allerdings keine Phosphorchloride entstehen und die Phosphorverbindungen dabei im Rückstand verbleiben.

Bei einem Säurelaugungsprozess, wie er beispielsweise in EP3770113B1 beschrieben ist, wird Klärschlammasche in einer Säure gelöst und später neutralisiert. Das Verfahren hat den Nachteil, dass große Volumina an Säuren und Laugen bei gleichzeitig vergleichsweise geringen Konzentrationen eingesetzt werden müssen, die zu großen Abfallmengen führen. Des Weiteren wird ein flüssig-flüssig Extraktionsverfahren eingesetzt, das mit dem Einsatz weiterer, kostenintensiver Chemikalien wie Komplexbildner verbunden ist.

Die Aufgabe der vorliegenden Erfindung war es daher, Phosphor in Form seiner Chloride aus einer Klärschlammasche in einem einfachen und kostengünstigen Verfahren wiederzugewinnen. Das Verfahren sollte zudem zu technisch einsetzbaren, respektive vermarktbaren Produkten führen und möglichst geringe Abfallmengen produzieren. Durch den direkten Einsatz der Klärschlammasche ohne vorhergehendes Lösen in Wasser oder Säure ist der Anfall an Abfall für die Abtrennung der Phosphorkomponente minimal.

### Lösung der Aufgabe

Überraschend wurde ein Verfahren zur Rückgewinnung von Phosphor in Form seiner Chloride gefunden, das dadurch gekennzeichnet ist, dass man Klärschlammasche mit einem Phosphorgehalt, ausgedrückt in Gew.-% an elementarem Phosphor in der Asche, von wenigstens 2 Gew.-%, in Gegenwart einer Kohlenstoffquelle mit elementarem Chlor bei einer Temperatur von 350 bis 900°C umsetzt und die gebildeten Phosphorchloride aus dem Abgasstrom abtrennt.

### Klärschlammasche

Im Sinne dieser Erfindung wird unter Klärschlammasche die Asche bezeichnet, die aus der Verbrennung von Klärschlamm stammt. Diese kann sowohl bei der Klärschlammverbrennung als auch bei der Klärschlammvergasung zur Erzeugung eines Brenngases erhalten werden. Die Klärschlammasche enthält neben Phosphorverbindungen vorzugsweise Verbindungen von Eisen (Fe), Aluminium (Al), Kalzium (Ca) und Silizium (Si).

Vorzugsweise weist die in dem erfindungsgemäßen Verfahren eingesetzte Klärschlammasche einen Phosphorgehalt, ausgedrückt in Gewichtsprozenten an elementarem Phosphor in der Asche, von wenigstens 3 %, vorzugsweise von 3 bis 29 Gew.-%, insbesondere von 3 bis 15 Gew.-% auf.

Die Klärschlammasche enthält bevorzugt einen Anteil an Eisenverbindungen von 5 bis 21 Gew.-% (gerechnet als elementares Eisen), sowie vorzugsweise einen Anteil an Calciumverbindungen von 4 bis 38 Gew.-% (gerechnet als elementares Calcium). Die bevorzugte Zusammensetzung einer Klärschlammasche enthält, gerechnet auf das jeweilige Element, vorzugsweise zudem:
Aluminium von 0,7 bis 20 Gew.-%,
Kalium von 0 bis 2 Gew.-%,
Magnesium von 0,1 bis 4 Gew.-%,
Natrium von 0,1 bis 4 Gew.-%
Schwefel von 0 bis 7 Gew.-%,
Silizium von 0 bis 24 Gew.-% und
Titan von 0 bis 2 Gew.-%.

Die Elemente machen zusammen, gerechnet als Oxide, vorzugsweise mehr als 70 Gew.-% der Klärschlammasche aus.

Die genaue strukturelle Zusammensetzung der Klärschlammasche lässt sich mit den üblichen, dem Fachmann zur Verfügung stehenden Analysemethoden wie Röntgendiffraktrometrie (XRD) nicht aufklären, da das Diffraktogramm ausschließlich Reflexe für das vorhandene SiO₂ zeigt.

Bevorzugt beträgt der Chloridgehalt in der Klärschlammasche weniger als 1 Gew.-%.

### Kohlenstoffquelle

Als Kohlenstoffquelle können grundsätzlich alle Modifikationen des Kohlenstoffes wie etwa Graphit, Ruß, Kohle, Koks, Aktivkohle, aber auch kohlenstoffhaltige Gase wie Kohlenmonoxid, Methan oder Phosgen genannt werden, aber auch flüssige Materialien wie Polyethylenglykol oder verschiedene Öle oder feste Materialen wie Bioabfälle oder Klärschlamm. Klärschlamm ist besonders bevorzugt. Dieser enthält vorzugsweise Kohlenstoff zu einem Anteil von wenigstens 35 Gew.-%, vorzugsweise von 20 bis 50 Gew.-%, bezogen auf die Trockenmasse.

Im Rahmen der vorliegenden Erfindung bezeichnet der Begriff "Klärschlamm" jede Suspension feinverteilter Partikel eines festen Substrats in einer Flüssigkeit. Vorzugsweise enthält der Klärschlamm einen Kohlenstoffgehalt, ausgedrückt in Gew.-% an elementarem Kohlenstoff, von wenigstens 5 Gew.-% Kohlenstoff. In einer bevorzugten Ausführungsform ist die Flüssigkeit, in der die Partikel suspendiert sind, Abwasser wie hierin definiert. Unter dem Begriff "Abwasser" werden alle Flüssigkeiten wässriger und/oder organischer Natur bzw. deren Gemische verstanden, die keine Trinkwasserqualität im Sinne der Trinkwassernormen haben.

In einer besonderen Ausführungsform liegt der Klärschlamm als Primärschlamm, Rohschlamm, Überschussschlamm, als behandelter und/oder stabilisierter Klärschlamm (aerob/anaerob) vor.

Unter dem Begriff "Bioabfälle" versteht man alle organischen Abfälle tierischen oder pflanzlichen Ursprungs, die in einem Haushalt oder einer Fabrik anfallen und durch Mikroorganismen, boden-lebende Organismen oder Enzyme abgebaut werden können. Als solche können beispielsweise genannt werden Stroh, Sägemehl, Wachse, Fette sowie Vogelkot.

Die Kohlenstoffquelle kann dabei fest, flüssig oder gasförmig sein. Bevorzugt ist der Einsatz einer festen Kohlenstoffquelle.

Sollte der Kohlenstoffanteil in der Kohlenstoffquelle bei kleiner als 70 Gew.-% liegen, wird vorzugsweise vor der Umsetzung mit Chlorgas eine Pyrolyse durchgeführt. Diese wird vorzugsweise unter Inertgas wie Stickstoff bei Temperaturen von 250 bis 800°C, bevorzugt bei 350 bis 550°C durchgeführt, bis die Gasbildung von flüchtigen Komponenten weniger als 1l/1kg eingesetzte Kohlenstoffquelle / Stunde beträgt.

Besonders bevorzugt wird als Kohlenstoffquelle Klärschlamm eingesetzt.

Bevorzugt beträgt der Chloridgehalt in der Kohlenstoffquelle, insbesondere bezogen auf sein Trockengewicht, weniger als 1 Gew.-%.

### Mischungsverhältnisse

Das Verhältnis der Gewichtsanteile des Kohlenstoffs der Kohlenstoffquelle zu Klärschlammasche ist vorzugsweise größer als 0,01, bevorzugt von 0,04 bis 0,5.

### Reaktor

Die nach dem erfindungsgemäßem Verfahren einzusetzende Klärschlammasche, vorzugsweise in Mischung mit der Kohlenstoffquelle, wird vorzugsweise in einen Reaktor gegeben, der vorzugsweise mit einer unter den einzustellenden Reaktionsbedingungen resistenten Schicht versehen ist. Bevorzugte Reaktormaterialien sind mit Nickel oder Nickelbasislegierungen oder Graphit beschichtete Reaktoren, oder Reaktoren bestehend aus einer Keramik wie Siliciumcarbid oder Aluminiumoxid oder Aluminiumoxid-Siliciumdioxid-Mischkeramik. Als solche können Rohrreaktoren wie Drehrohr-reaktoren oder andere Reaktoren verwendet werden. Besonders bevorzugt sind Reaktoren, die eine Bewegung der Klärschlammasche, vorzugsweise in Mischung mit der Kohlenstoffquelle, während der Reaktion erlauben, um eine möglichst effektive Kontaktaufnahme der Klärschlammasche, vorzugsweise in Mischung mit der Kohlenstoffquelle und Chlorgas zu erlauben. Dabei sind Wirbelbettvorrichtungen, sowie Drehrohrreaktoren oder eine Reaktion in einer Extrudervorrichtung mit Schneckenvortrieb bevorzugt. Ebenso kann ein Festbettreaktor oder ein schachtofenartiger Reaktor zum Einsatz kommen.

Vorzugsweise befindet sich an dem Reaktor ein Auslass für den Abgasstrom. In dem Abgasstrom befinden sich die gasförmigen Reaktionsprodukte, flüchtige Bestandteile der Klärschlammasche ggf. in Mischung mit der Kohlenstoffquelle sowie ggf. überschüssiges Chlorgas, die zusammen aus dem Reaktionsraum abgeleitet werden können.

Im Falle eines Rohreaktors beträgt die Reaktorlänge vorzugsweise 0,2 bis 40 m. Die Verweilzeit im Reaktor während der Reaktion richtet sich in der Regel nach Temperatur und Kontaktmöglichkeit von Material zu Chlorgas. Dabei kann sich die Verweilzeit im Reaktor beispielsweise von einer Minute bis 5 Stunden hinziehen. Das erfindungsgemäße Verfahren kann als Batch oder kontinuierlich betrieben werden.

### Verfahren

Bevorzugt erfolgt zunächst die Mischung der Klärschlammasche und der Kohlenstoffquelle. Sofern der Kohlenstoffanteil in der Kohlenstoffquelle kleiner als 70 Gew.-% beträgt, findet vorzugsweise vor der Umsetzung mit Chlorgas eine Pyrolyse statt. Diese wird vorzugsweise unter Inertgas wie Stickstoff bei Temperaturen von 250 bis 800°C, bevorzugt bei 350 bis 550°C durchgeführt, bis die Gasbildung von flüchtigen Komponenten weniger als 1l/1kg eingesetzte Kohlenstoffquelle / Stunde beträgt. Die Abgase werden dabei vorzugsweise abgeleitet.

Bevorzugt erfolgt die Pyrolyse in einem Inertgasstrom, vorzugsweise Stickstoff oder Argon, mit einem Sauerstoffgehalt von bevorzugt weniger als 0,1 Volumenprozent bei einer Temperatur von 200 bis 800°C, bevorzugt von 350 bis 550°C, insbesondere bis keine Gasentwicklung mehr auftritt. Die austretenden Gase werden bevorzugt verbrannt und können zur Wärme- oder Stromerzeugung genutzt oder einer stofflichen Nutzung zugeführt werden.

Nach dem Mischen der Komponenten Kärschlammasche und Kohlenstoffquelle, und der ggf. vorgenommenen Pyrolyse, erfolgt die Umsetzung mit Chlorgas. Bevorzugt beträgt der Chloridgehalt dieser Mischung weniger als 1 Gew.-%.

Das Chlorgas kann dabei auf verschiedene Weise mit der Klärschlammasche-Kohlenstoffquelle-Mischung in Kontakt gebracht werden. Die Umsetzung erfolgt dabei vorzugsweise mit einem Sauerstoffgehalt von bevorzugt weniger als 0,5, insbesondere weniger als 0,3 Volumenprozent. Ebenfalls ist es bevorzugt, die Umsetzung bei einem Wassergehalt von bevorzugt weniger als 0,5, insbesondere weniger als 0,3 Volumenprozent durchzuführen. Vorzugsweise wird Chlor über oder durch die Mischung geleitet, wobei die Mischung zur effektiven Umsetzung bevorzugt während der Reaktion bewegt wird. Dies kann in einem Drehrohrofen erfolgen oder in einem Schaufeltrockner, in dem die Mischung bewegt wird. Das Chlorgas kann aber auch durch die Mischung hindurchgeleitet werden, was beispielsweise in einem Wirbelbett oder Festbett erreicht werden kann. Gegebenenfalls kann zu diesem Zwecke die Klärschlammasche zuvor einer Formgebung, zum Beispiel Kompaktierung oder Pelletierung, unterzogen werden. Sofern es sich bei der Kohlenstoffquelle um eine gasförmige Verbindung handelt, erfolgt der oben beschriebene Chlorgaseinsatz vorzugsweise zusammen oder getrennt mit der gasförmigen Kohlenstoffquelle zur Klärschlammasche.

Die Umsetzung mit Chlor erfolgt dabei vorzugsweise bei einer Temperatur von 450 bis 850°C. Die Reaktion ist vorzugsweise beendet, wenn der Anteil von Phosphorverbindungen im Abgasstrom, vorzugsweise gemessen mit Hilfe eines entsprechend in Gewichtsprozenten kalibrierten Gasphasen-IR-Spektrometers, kleiner als 0,1 Gew.-%, insbesondere kleiner als 0,01 Gew.-% ist.

In dem Abgasstrom befindet sich neben den Phosphorchloriden, worunter insbesondere Phosphoroxychlorid und Phosphortrichlorid verstanden werden, auch ggf. gasförmiges Eisen(III)chlorid, und ggf. auch AlCl₃, sofern Eisen und/oder Aluminium in der Klärschlammasche enthalten sind.

Bei einer Reaktionstemperatur von 300 bis 320°C ist der Anteil an Eisen(III)chlorid im Abgasstrom in der Regel vergleichsweise klein und erhöht sich erst nach einer Temperaturerhöhung auf 350 bis 400°C. Eisen(III)chlorid und auch AlCl₃, sofern Aluminium in der Klärschlammasche enthalten ist, lassen sich aus dem Abgasstrom vorzugsweise durch Resublimation an unterschiedlich kühlen Oberflächen abscheiden und voneinander trennen. Sofern das Eisenchlorid zusammen mit AlCl₃ im Abgasstrom vorhanden ist, können die jeweiligen Chloride aufgrund genügend unterschiedlicher Siedepunkte auch fraktioniert an verschiedenen Oberflächen mit unterschiedlichen Temperaturen resublimiert und dadurch sehr sauber getrennt werden.

Bevorzugte Abscheidetemperaturen sind für FeCl₃ kleiner gleich 307°C, insbesondere 150 bis 300°C und für AlCl₃ kleiner gleich 150°C, insbesondere 110 bis 149°C. Die Phosphor-Chlor-Verbindung kann auch Adduktverbindungen mit FeCl₃ eingehen, die niedrigere Schmelzpunkte von etwa 100°C aufweisen. Die Trennung der P- und Fe-haltigen Verbindungen kann ggf. durch Destillation erfolgen.

Das erfindungsgemäß wiedergewonnene Eisen in Form von Eisen(III)chlorid kann, ggf. nach einer Reinigung wie oben beschreiben, in die gewünschte Rohstoffform des Eisens beispielsweise für die Herstellung von Kathodenaktivmaterialien von Lithiumionenbatterien überführt werden. Als Beispiele sind hier das Eisensulfat, Eisennitrat, Eisenphosphat oder die unterschiedlichsten Formen des Eisenoxids zu nennen.

Alternativ kann das Eisen(III)chlorid oder die Adduktverbindungen, auch ohne dass diese durch Resublimation abgeschieden wurden, direkt als Gasstrom in ein wässriges Medium, enthaltend Schwefelsäure, Salpetersäure oder Phosphorsäure, eingeleitet werden und dadurch zur Bildung entsprechender Eisen(III)sulfate, -nitrate oder -phosphate gebracht werden. Ggf. wird bei der Umsetzung ein geeignetes Reduktionsmittel mitverwendet, um zu einem Eisen(II)sulfat, Eisen(II)nitrat bzw. Eisen(II)phosphat zu gelangen.

Alternativ kann der Abgasstrom in ein nicht-wässriges Medium wie flüssiges POCl₃ eingeleitet werden und die Eisenverbindungen dort gelöst werden.

Bevorzugt ist jedoch die Abtrennung von Eisenchlorid aus dem Abgasstrom durch Resublimation.

Bei dem erfindungsgemäßen Verfahren können die Chloride des Phosphors, bevorzugt das Phosphoroxychlorid und ggf. ebenfalls gebildetes Phosphortrichlorid, vorzugsweise mittels eines Kondensators dem Abgasstrom entnommen werden und ggf. überschüssiges Chlorgas zurückgeführt werden.

Aus dem Abgasstrom wird vorzugsweise das bei Reaktionstemperatur gasförmige Phosphoroxychlorid und das ggf. ebenfalls gebildete gasförmige Phosphortrichlorid mittels eines Kondensators voneinander abgetrennt. In der Regel bildet sich ein Gemisch an Phosphoroxychlorid und Phosphortrichlorid, welches hinsichtlich seiner Komponenten weiter destillativ aufgetrennt werden kann. Dadurch sind die Phosphorkomponenten in sehr reiner Form zu gewinnen.

Bevorzugt ist das erfindungsgemäße Verfahren dadurch gekennzeichnet, dass der Phosphortrichlorid enthaltende Abgasstrom oder das Phosphortrichlorid nach Separation daraus mit Chlorgas bei einer Temperatur von 20 bis 160°C zu PCl₅ umgesetzt wird. Bei dieser Umsetzung bildet sich Phosphorpentachlorid. Bevorzugt ist dabei ein molares Cl₂/Phosphortrichlorid-Verhältnis von 1:1 bis 10:1.

Bevorzugt ist das erfindungsgemäße Verfahren zur Wiedergewinnung von Phosphorverbindungen in Form von Chlorphosphorverbindungen, insbesondere in Form einer Mischung von Phosphor-oxychlorid und Phosphortrichlorid.

Phosphoroxychlorid und Phosphortrichlorid fallen im Abgasstrom üblicherweise in einem Gewichts-verhältnis von 10 zu 1 bis 1 zu 10 an.

Die Chloride des Phosphors aus dem erfindungsgemäßen Verfahren kann man zugunsten des Phosphortrichlorid und damit zu dem bevorzugten Edukt für die Phosphorpentachlorid-Bildung führen, in dem man die Reaktion vorzugsweise oberhalb von 500°C durchführt. Ebenfalls bevorzugt ist es, das Verfahren bei einem Kohlenstoff/Klärschlammasche-Gewichtsverhältnis von größer als 0,01, insbesondere von 0,04 bis 0,5 durchzuführen.

Sofern das erfindungsgemäße Verfahren ohne stöchiometrischen Chlorüberschuss betrieben wird und sich somit wenig bis kein Chlor im Abgasstrom befindet, kann der die Chloride des Phosphors, insbesondere Phosphoroxychlorid und ggf. Phosphortrichlorid enthaltende Abgasstrom, vorzugsweise, nachdem er von Eisenchlorid befreit wurde, auch in Wasser oder eine Lauge eingeleitet werden, um die entsprechenden Säuren des Phosphors wie Phosphorsäure und Phosphonsäuren zu erhalten, aus denen dann ggf. weitere Phosphorderivate, wie deren Ester hergestellt, werden können.

### Beispiele

### Analytik:

Die Analytik auf Phosphorverbindungen, insbesondere POCl₃ und PCl₃, wird vorzugsweise mittels online-IR im Abgasstrom durchgeführt. Dazu wird der Gasstrom aus dem Reaktor durch eine Glasküvette geleitet, die den Durchgang von IR-Strahlung in einem möglichst weiten Spektralbereich erlaubt, zum Beispiel durch den Einsatz von Fenstern aus einer Thaliumverbindung. Durch vorher-gehende Kalibrierung (Totalverdampfen von bekannten PCl₃- respektive POCl₃-Masseströmen in einen Stickstoff-Gasstrom mit bekanntem Volumenstroms und Quantifizierung charakteristischer Banden im IR-Spektrum) kann der Masseanteil der Phosphorverbindungen im Abgasstrom ermittelt werden.

Angegebene Gewichtsprozente wurden durch eine ICP-OES Messung ermittelt. Dazu wird eine gewogene Menge der Feststoffes zunächst in einer bekannten Menge einer Säure gelöst, die Konzentration der angegebenen Elemente in einem ICP gegen eine Kalibriermessung ermittelt und aus dieser auf den Feststoff als Anteil zurückgerechnet.

Kohlenstoffanalysen wurden mit einem speziellen Kohlenstoffanalysengerät Typ G4 ICARUS HF durchgeführt.

### Beispiel 1:

200g Klärschlammasche einer Klärschlammverbrennungsanlage mit den bestimmten Inhaltsstoffen (Calcium 8,1 Gew.-%, Eisen 6,4 Gew.-%, Phosphor 5,0 Gew.-%, Aluminium 6,0 Gew.-%, Chlor <0,1 Gew.-%, jeweils gerechnet als Elemente, Farbe: Rot) werden mit 133g Klärschlamm (45% Feststoffgehalt, 30% Kohlenstoffgehalt im Trockenrückstand) gemischt und in einem Quarzglasrohr, das in einen elektrischen Ofen eingelegt ist, unter Luftausschluss in einem Stickstoffgasstrom von 1l/min auf 500°C erhitzt und für eine Stunde auf dieser Temperatur gehalten, bis keine gasförmigen Produkte mehr gebildet werden. Die Abluft wird durch einen Wäscher geleitet und entsorgt. Das erhaltene Gemisch (Farbe: Schwarz) wird nach dem Abkühlen zerkleinert und homogenisiert.

60g des Gemisches (gemessener Gesamt-Kohlenstoffgehalt: 10,2 Gew.-%, Calcium 7,5 Gew.-%, Eisen 9,7 Gew.-%, Phosphor 6,6 Gew.-%, Aluminium 6,1 Gew.-%, Magnesium 1,1 Gew.-%, Chlor: <0,1 Gew.-%,) werden wieder in das Quarzglasrohr eingelegt, auf 780°C erhitzt und bei dieser Temperatur gehalten. Dann wird ein Strom von 100ml/min Chlorgas (Reinheit 99,8%) über das Gemisch geleitet. Entstandenes FeCl₃- enthaltendes Produkt wird an einem Kühler bei einer Temperatur von 200°C resublimiert. Der bei dieser Temperatur gasförmige Produktgasstrom wird in unregelmäßigen Zeitabständen in einem Gasphasen-Infrarotspektrometer analysiert und dann über Kühlfalle und Wäscher entsorgt.

Nach einiger Zeit erscheint im IR-Spektrum der Gasphase, neben Banden für CO₂ und anderen, eine Adsorptionsbande bei 501 cm⁻¹, die PCl₃ zugeordnet werden kann.

Nach etwa drei Stunden Reaktionszeit gehen die Intensitäten aller im IR beobachteten Banden zurück und die Reaktion ist beendet.

Der Chlorgasstrom wird abgeschaltet und durch einen Stickstoffstrom ersetzt. Den Reaktor lässt man unter diesen Bedingungen auf Raumtemperatur abkühlen und das Reaktionsgemisch (43,9g, Farbe: Weißgrau, C-Gehalt: 2 Gew.-%) wird entnommen. Der im Reaktorrohr zurückbleibende Rückstand ist teilweise wasserlöslich. Bei der erhaltenen Lösung handelt es sich um eine schwermetallhaltige wässrige Calcium- und Magnesiumchloridlösung, die durch dem Fachmann bekannte Verfahren wie lonenaustauscherharze von eventuell vorhandenen Schwermetallspuren getrennt werden kann.

Das entstandene gelbe FeCl₃-haltige Produkt wird ebenfalls isoliert und in Wasser gelöst. Es ist vollständig wasserlöslich. Das entstandene FeCl₃-haltige Produkt kann alternativ in konzentrierter Schwefelsäure aufgenommen werden, um eventuell anhaftendes PCl₃ freizusetzen und das Eisenchlorid in Eisensulfat umzuwandeln. Alternativ kann es erwärmt werden, um eventuell anhaftendes PCl₃ freizusetzen.

### Beispiel 2:

60g Klärschlammasche einer Klärschlammverbrennungsanlage enthaltend (Calcium 8,1 Gew.-%, Eisen 6,4 Gew.-%, Phosphor 5,0 Gew.-%, Aluminium 6,0 Gew.-%, jeweils gerechnet als Elemente; Farbe: Rot) werden mit 2,5g Aktivkohle gemischt und in einem Quarzglasrohr, das in einen elektrischen Ofen eingelegt ist, unter Luftausschluss in einem Stickstoffgasstrom von 1l/min auf 600°C erhitzt.

Dann wird der Stickstoffstrom durch einen Strom von 100ml/min Chlorgas (Reinheit 99,8%) ersetzt und für 6,5 Stunden bei 600°C über das Gemisch geleitet. Entstandenes FeCl₃ wird an einem Kühler bei einer Temperatur von 200°C resublimiert. Der bei dieser Temperatur gasförmige Produktgasstrom wird in unregelmäßigen Zeitabständen in einem Gasphasen-Infrarotspektrometer analysiert und dann über Kühlfalle und Wäscher entsorgt.

Nach etwa 10 Minuten Reaktionszeit erscheinen im IR-Spektrum der Gasphase zwei Adsorptionsbanden bei 593 cm⁻¹ und bei 1322 cm⁻¹, die POCl₃ zugeordnet werden können.

Der im Reaktorrohr zurückbleibende Rückstand (54,6g) ist zu 36 Gew.-% wasserlöslich. Bei der erhaltenen Lösung handelt es sich um eine wässrige, alkali-, erdalkali- und schwermetallhaltige Calciumchloridlösung und kann durch dem Fachmann bekannte Verfahren wie lonenaustauscherharze von eventuell vorhandenen Schwermetallspuren getrennt werden.

Das entstandene FeCl₃-haltige Produkt kann in konzentrierter Schwefelsäure aufgenommen werden, um eventuell anhaftendes POCl₃ freizusetzen und das Eisenchlorid in Eisensulfat umzuwandeln. Alternativ kann es erwärmt werden, um eventuell anhaftendes POCl₃ freizusetzen.

### Beispiel 3:

62,3g Klärschlammasche einer Klärschlammverbrennungsanlage (enthaltend Calcium 8,1 Gew.-%, Eisen 6,4 Gew.-%, Phosphor 5,0 Gew.-%, Aluminium 6,0 Gew.-%, jeweils gerechnet als Elemente; Farbe: Rot) werden mit 2,5g Aktivkohle gemischt und in einem Quarzglasrohr, das in einen elektrischen Ofen eingelegt ist, unter Luftausschluss in einem Stickstoffgasstrom von 1l/min auf 500°C erhitzt.

Dann wird der Stickstoffstrom durch einen Strom von 100ml/min Chlorgas (Reinheit 99,8%) ersetzt und für 6 Stunden bei 500°C über das Gemisch geleitet. Entstandenes FeCl₃ wird, teilweise zusammen mit P-Chlor-Verbindungen, an einem Kühler bei einer Temperatur von 200°C resublimiert. Der bei dieser Temperatur gasförmige Produktgasstrom wird in unregelmäßigen Zeitabständen in einem Gasphasen-Infrarotspektrometer analysiert und dann über Kühlfalle und Wäscher entsorgt.

Nach etwa 10 Minuten Reaktionszeit erscheint im IR-Spektrum der Gasphase zwei Adsorptionsbanden bei 593 cm⁻¹ und bei 1322 cm⁻¹, die POCl₃ zugeordnet werden können.

Der im Reaktorrohr zurückbleibende Rückstand (60,2g) ist gelb-rot, in tieferen Schichten grau.

Das entstandene FeCl₃-haltige Produkt kann in konzentrierter Schwefelsäure aufgenommen werden, um eventuell anhaftendes POCl₃ freizusetzen und das Eisenchlorid in Eisensulfat umzuwandeln. Alternativ kann es erwärmt werden, um eventuell anhaftendes POCl₃ freizusetzen.

## Patentansprüche

1. Verfahren zur Rückgewinnung von Phosphor in Form seiner Chloride, in dem man Klärschlamm-asche mit einem Phosphorgehalt, ausgedrückt in Gew.-% an elementarem Phosphor in der Asche, von wenigstens 2 Gew.-% in Gegenwart einer Kohlenstoffquelle mit elementarem Chlor bei einer Temperatur von 350 bis 900°C umsetzt und die gebildeten Phosphorchloride aus dem Abgasstrom abtrennt.

2. Verfahren nach Anspruch 1, **dadurch gekennzeichnet, dass** die eingesetzte Klärschlammasche einen Phosphorgehalt, ausgedrückt in Gewichtsprozenten an elementarem Phosphor in der Asche, von wenigstens 3 %, vorzugsweise von 3 bis 29 Gew.-% aufweist.

3. Verfahren nach wenigstens einem der Ansprüche 1 oder 2, **dadurch gekennzeichnet, dass** die eingesetzte Klärschlammasche einen Eisengehalt von 5 bis 21 Gew.-%, gerechnet als elementares Eisen aufweist.

4. Verfahren nach wenigstens einem der Ansprüche 1 bis 3, **dadurch gekennzeichnet, dass** die Umsetzung mit elementarem Chlor bei einer Temperatur von 450 bis 850°C erfolgt.

5. Verfahren nach wenigstens einem der Ansprüche 1 bis 4, **dadurch gekennzeichnet, dass** die eingesetzte Klärschlammasche einen Eisengehalt aufweist und gebildetes Eisenchlorid zusammen mit gebildeten Phosphorchloriden im Abgasstrom abgeleitet wird, und aus dem Abgasstrom das Eisenchlorid und die Phosphorchloride getrennt werden.

6. Verfahren nach wenigstens einem der Ansprüche 1 bis 5, **dadurch gekennzeichnet, dass** aus dem Abgasstrom gebildete Phosphorchloride, insbesondere Phosphoroxychlorid und ggf. Phosphortrichlorid und/oder Phosphorpentachlorid durch Kondensation abgeschieden werden.

7. Verfahren nach wenigstens einem der Ansprüche 1 bis 5, **dadurch gekennzeichnet, dass** die Kohlenstoffquelle ausgewählt wird aus der Gruppe Graphit, Ruß, Kohle, Koks, Aktivkohle, Kohlenmonoxid, Öle, Methan, Polyethylenglykol, Bioabfälle, und insbesondere Klärschlamm.

8. Verfahren nach wenigstens einem der Ansprüche 1 bis 7, **dadurch gekennzeichnet, dass** das Verhältnis der Gewichtsanteile des Kohlenstoffs der Kohlenstoffquelle zu Klärschlammasche größer als 0,01 ist, bevorzugt von 0,04 bis 0,5 beträgt.

9. Verfahren nach wenigstens einem der Ansprüche 1 bis 8, **dadurch gekennzeichnet, dass**, sofern der Kohlenstoffanteil in der Kohlenstoffquelle kleiner als 70 Gew.-% beträgt, die Mischung von Klärschlammasche und Kohlenstoffquelle vor der Umsetzung mit Chlorgas unter Inertgas bei Temperaturen von 250 bis 800°C, bevorzugt bei 350 bis 550°C, solange behandelt wird, bis die Gasbildung von flüchtigen Komponenten weniger als 1l/1kg eingesetzte Kohlenstoffquelle / Stunde beträgt.

10. Verfahren nach wenigstens einem der Ansprüche 1 bis 9, **dadurch gekennzeichnet, dass** man den Rückstand von unlöslichen Bestandteilen mit Wasser abtrennt.

## Geänderte Patentansprüche

### Geänderte Patentansprüche gemäss Regel 137(2) EPÜ.

1. Verfahren zur Rückgewinnung von Phosphor in Form seiner Chloride, in dem man Klärschlamm-asche mit einem Phosphorgehalt, ausgedrückt in Gew.-% an elementarem Phosphor in der Asche, von wenigstens 2 Gew.-% in Gegenwart einer Kohlenstoffquelle mit elementarem Chlor, wobei die Umsetzung mit einem Sauerstoffgehalt von weniger als 0,5, insbesondere weniger als 0,3 Volumenprozent erfolgt, bei einer Temperatur von 350 bis 900°C umsetzt, **dadurch gekennzeichnet, dass** aus dem Abgasstrom die gebildeten Phosphorchloride, in Form von Phosphoroxychlorid und ggf. Phosphortrichlorid und/oder Phosphorpentachlorid durch Kondensation abgeschieden werden.

2. Verfahren nach Anspruch 1, **dadurch gekennzeichnet, dass** die eingesetzte Klärschlammasche einen Phosphorgehalt, ausgedrückt in Gewichtsprozenten an elementarem Phosphor in der Asche, von wenigstens 3 %, vorzugsweise von 3 bis 29 Gew.-% aufweist.

3. Verfahren nach wenigstens einem der Ansprüche 1 oder 2, **dadurch gekennzeichnet, dass** die eingesetzte Klärschlammasche einen Eisengehalt von 5 bis 21 Gew.-%, gerechnet als elementares Eisen aufweist.

4. Verfahren nach wenigstens einem der Ansprüche 1 bis 3, **dadurch gekennzeichnet, dass** die Umsetzung mit elementarem Chlor bei einer Temperatur von 450 bis 850°C erfolgt.

5. Verfahren nach wenigstens einem der Ansprüche 1 bis 4, **dadurch gekennzeichnet, dass** die eingesetzte Klärschlammasche einen Eisengehalt aufweist und gebildetes Eisenchlorid zusammen mit gebildeten Phosphorchloriden im Abgasstrom abgeleitet wird, und aus dem Abgasstrom das Eisenchlorid und die Phosphorchloride getrennt werden.

6. Verfahren nach wenigstens einem der Ansprüche 1 bis 5, **dadurch gekennzeichnet, dass** die Kohlenstoffquelle ausgewählt wird aus der Gruppe Graphit, Ruß, Kohle, Koks, Aktivkohle, Kohlenmonoxid, Öle, Methan, Polyethylenglykol, Bioabfälle, und insbesondere Klärschlamm.

7. Verfahren nach wenigstens einem der Ansprüche 1 bis 6, **dadurch gekennzeichnet, dass** das Verhältnis der Gewichtsanteile des Kohlenstoffs der Kohlenstoffquelle zu Klärschlammasche größer als 0,01 ist, bevorzugt von 0,04 bis 0,5 beträgt.

8. Verfahren nach wenigstens einem der Ansprüche 1 bis 7, **dadurch gekennzeichnet, dass**, sofern der Kohlenstoffanteil in der Kohlenstoffquelle kleiner als 70 Gew.-% beträgt, die Mischung von Klärschlammasche und Kohlenstoffquelle vor der Umsetzung mit Chlorgas unter Inertgas bei Temperaturen von 250 bis 800°C, bevorzugt bei 350 bis 550°C, solange behandelt wird, bis die Gasbildung von flüchtigen Komponenten weniger als 1l/1kg eingesetzte Kohlenstoffquelle / Stunde beträgt.

9. Verfahren nach wenigstens einem der Ansprüche 1 bis 8, **dadurch gekennzeichnet, dass** man den Rückstand von unlöslichen Bestandteilen mit Wasser abtrennt.
